# EUROPÄISCHE PATENTSCHRIFT

(11) **EP 0 458 023 B1**
(45) Veröffentlichungstag und Bekanntmachung des Hinweises auf die Patenterteilung: **27.10.1993**
(21) Anmeldenummer: 91103654.9
(22) Anmeldetag: 09.03.1991
(51) Int. Cl.: A23L 1/185, A23L 1/275, C12C 1/18

(54) **Verfahren zur Herstellung eines dunklen Lebensmittels und dessen Verwendung**
Process for the production of a dark food and its use
Procédé pour la production d'un produit alimentaire sombre et son utilisation

(30) Priorität: 21.05.1990 DE 4016314
(43) Veröffentlichungstag der Anmeldung: 27.11.1991
(73) Patentinhaber: Ireks GmbH, D-95306 Kulmbach (DE)
(72) Erfinder: Meyer, Bernd, Dr. rer.nat., W-8650 Kulmbach (DE)
(74) Vertreter: Rau, Manfred, Dr. Dipl.-Ing.

(56) Entgegenhaltungen:
- EP-A- 0 372 243
- DE-C- 3 009 493

## Beschreibung

Die Erfindung betrifft ein Verfahren zur Herstellung eines dunklen Lebensmittels, dieses Lebensmittel selber und dessen Verwendung zum Färben.

Es ist bekannt und üblich, zahlreichen Lebens- oder Futtermitteln zur Verbesserung ihres Aussehens, ihrer Farbe, ihres Geschmackes, ihrer Akzeptanz und gegebenenfalls anderer sensorischer Eigenschaften Farbstoffe oder farbgebende, also färbende, Lebensmittel mit möglichst guten geschmacklichen oder zumindest geschmacksneutralen Eigenschaften zuzusetzen.

Zur Erzielung eines braunen Farbtones verwendet man hierfür sehr oft Zuckerkulöre verschiedener Arten. Daneben werden auch geröstete Produkte, wie Röstmalz und Röstgetreide, kakaohaltige Erzeugnisse, Kaffee-Erzeugnisse od.dgl. eingesetzt. Darüber hinaus werden auch Farbstoffe, wie Annato, Bixin, β-Carotin verwendet, die sich bei Wärmebehandlung braun verfärben. Außer Zuckerkulör sind diese Stoffe entweder nicht temperaturbeständig, wie z.B. β-Carotin, oder sie weisen eine zu geringe Farbkraft oder aber einen röstigen Nebengeschmack, einen grauen Farbton oder mehrere dieser negativen Eigenschaften auf. Außer Zuckerkulör wird auch Karamelzuckersirup eingesetzt, der allerdings eine geringere Farbkraft aufweist.

Zuckerkulöre und Karamelzuckersirup werden in der Regel durch Erhitzen von Zucker mit Säuren, Alkalien, Salzen, insbesondere Sulfiten und/oder Ammoniumsalzen, über einen längeren Zeitraum auf relativ hohe Temperaturen von 120 bis 180°C, meist 150 bis 180°C, hergestellt. Dabei bilden sich dunkel gefärbte Zuckerkulöre bzw. Karamelzuckersirupe, die um so dunkler sind, je länger die Behandlungszeit und/oder je höher die Behandlungstemperatur ist. Sie schmecken um so bitterer, je dunkler ihre Farbe ist. Karamelzuckersirupe haben eine geringere Farbkraft als Zuckerkulöre, wobei es ansonsten eine klare Abgrenzung zwischen diesen beiden Produkten nicht gibt. Da Zuckerkulöre nur zum Zweck der Färbung eingesetzt werden, gelten sie in lebensmittelrechtlicher Sicht als Farb- und Zusatzstoffe. Darüber hinaus bestehen bei den heute gegenüber Zusatz- und Farbstoffen kritisch gewordenen Verbrauchern gelegentlich Vorbehalte gegen bei der Zuckerkulörherstellung entstehende Nebenprodukte, wie z.B. das 4-Methylimidazol und andere Heterocyclen, die beim Einsatz von Ammoniak anfallen. In einigen Ländern ist daher für Grundnahrungsmittel der Einsatz von Zuckerkulör bzw. Karamelzuckersirup bereits untersagt, wie z.B. der Einsatz für Brot in Dänemark; in anderen Ländern, wie beispielsweise der Bundesrepublik Deutschland, wird ein solches Verbot erörtert und vorbereitet.

Aus der DE-PS 30 09 493 ist es bekannt, ein färbendes Malzprodukt durch Extraktion von geröstetem Malz herzustellen. Dabei handelt es sich um sogenannte Farbmalzauszüge, die durch Extraktion der löslichen Farbstoffe und Begleitstoffe aus geröstetem Malz gewonnen werden. Diese Farbmalzauszüge verursachen einen unangenehmen grau-braunen Farbton. Unter Farbmalzen versteht man Malze, die beim Darren mit sehr hoher Temperatur behandelt worden sind.

Es ist daher seit langem ein Bedürfnis, ein natürliches Lebensmittel, das keine Zusatzstoffe enthält und ohne solche Zusatzstoffe herstellbar ist, mit hoher Farbkraft und ansprechenden organoleptischen Eigenschaften herstellen zu können, um damit Lebensmitteln eine angenehm braune Färbung oder Bräunung zu verleihen, und zwar möglichst ohne eine graue Farbnuance.

In der älteren nicht vorveröffentlichten EP-A-0 372 243 wurde hierzu ein Verfahren vorgeschlagen, bei welchem ein Ausgangs-Malzextrakt mit zerkleinertem Grünmalz und/oder zerkleinertem Malz und/oder wässrigen Auszügen von zerkleinertem Grünmalz und/oder zerkleinertem Malz gemischt und auf eine Temperatur von 90 bis 120°C erhitzt und unter Rühren so lange auf die- ser Temperatur gehalten wird, bis das Gemisch eine starke dunkle Färbung annimmt. Dieses Verfahren ist außerordentlich vorteilhaft und wirksam; beim Einsatz von Grünmalz oder zerkleinertem Malz ist allerdings eine Filtration des Endproduktes, nämlich des dunklen Malzextraktes erforderlich, um feste Bestandteile zu entfernen. Bei Einsatz von wässrigen Auszügen von zerkleinertem Grünmalz und/oder zerkleinertem Malz ist ebenfalls ein zusätzlicher Arbeitsgang, nämlich die Herstellung dieser Auszüge, erforderlich.

Der Erfindung liegt daher die Aufgabe zugrunde, ein natürliches Lebensmittel mit hoher brauner Farbkraft und ansprechenden organoleptischen Eigenschaften ohne Verwendung von Zusatzstoffen in verfahrenstechnisch besonders einfacher Weise herzustellen.

Diese Aufgabe konnte durch die Merkmale des Anspruches 1 gelöst werden. Überraschenderweise wurde gefunden, daß eine thermische Behandlung mit relativ gemäßigten Temperaturen über einen längeren Zeitraum des seit alters her geschätzten und ernährungsphysiologisch hoch eingestuften Malzextrakts dann zu einem sehr dunklen, braun gefärbten (und braun färbenden) Malzextrakt mit hoher Farbkraft führt, wenn zur Herstellung des Malzextrakts Grünmalz oder mit Blattkeimlingen aus dem natürlichen Mälzungsprozeß angereichertes Malz neben üblicherweise verwendetem Malz zugesetzt wird. Die nichtlöslichen Anteile dieser Zusätze werden nach dem üblichen Maischprozeß mit der Treber abgeläutert (= abfiltriert). Es sind also keinerlei zusätzliche Verfahrensschritte bei der Herstellung des speziellen Malzextrakts notwendig. Es werden also keine malzfremden Zusätze oder gar Zusatzstoffe, wie Säuren, Alkalien, Salze od.dgl. bei der Behandlung zugesetzt. Diese dunklen Malzextrakte sind also reine Lebensmittel und ohne jegliche Zusatzstoffe hergestellt. Der Nachweis auf Zuckerkulör ist negativ. Sie besitzen einen angenehmen Geschmack und verbessern durch ihren verbliebenen Zuckergehalt und andere Inhaltsstoffe den Geschmack und die Frischhaltung von Lebensmitteln, denen sie zugesetzt werden. Bei solchen Lebensmitteln der letztgenannten Art handelt es sich insbesondere um Backwaren, aber auch um Bonbons und andere Lebensmittel, wie z.B. Getränke. Diese dunklen Malzextrakte sind daher sehr gut geeignet, Zuckerkulör, Karamelzuckersirup und andere bräunende Zusätze in Lebensmitteln und Futtermitteln zu ersetzen und dabei die sensorischen Eigenschaften dieser Lebens- und Futtermittel noch zu verbessern.

Überraschenderweise konnten durch die erfindungsgemäßen Maßnahmen dunkle Malzextrakte mit einer Farbkraft bis zu und über 25 000 EBC-Einheiten hergestellt werden. Die braunen Malzextrakte zeichnen sich durch einen angenehmen Braunton aus, den sie auch dem Lebensmittel vermitteln, zu dessen Färbung sie eingesetzt werden. Ein rotstichiges Aussehen, wie es insbesondere von den Karamelzuckersirupen bekannt ist, wird vermieden. Ebenso tritt keine Grautönung ein, wie sie von Röstprodukten, wie Farbmalz oder Röstgetreide, bekannt ist. Die braunen Malzextrakte können zur Einstellung der Farbtiefe, der Süße und der Viskosität auch mit anderen Zutaten, wie z.B. normalem üblichem Malzextrakt und Wasser gemischt werden, so daß die jeweils gewünschte Konsistenz, Farbe und Viskosität erzielt wird.

Die dunklen Malzextrakte können auch auf Trägerstoffe, wie Mehle, Quellmehle, Stärken, Maltodextrine usw. aufgebracht und daraus pulverförmige oder granulierte Erzeugnisse zum Einsatz in Lebens- oder Futtermitteln hergestellt werden. Eine solche Weiterverarbeitung kann z.B. auf Walzentrocknern, Extrudern, Wirbelbett-Trocknern oder Sprühtrocknern od.dgl. durchgeführt werden. Auch durch Mischung mit anderen Produkten, wie z.B. Röstgetreide, Röstmalz usw. können andere Farbschattierungen erzielt werden.

Da auch beim Einsatz des erfindungsgemäß erhaltenen Malzextrakts in Backwaren deren Geschmack und deren Frischhaltung verbessert werden, können diese dunklen Malzextrakte auch mit Vorteil als Bestandteil von Backmitteln, und zwar auch von gesäuerten Backmitteln, in flüssiger oder fester Form verwendet werden.

Als Malz kann bevorzugt Gerstenmalz aber auch Weizenmalz oder Roggenmalz eingesetzt werden.

"Malz" wird in der Weise hergestellt, daß Getreide, in Deutschland üblicherweise Gerste, in Wasser eingeweicht und nach ausreichender Wasseraufnahme zum Keimen gebracht wird. Dieses gekeimte Getreide wird als "Grünmalz" bezeichnet. Es ist noch feucht. Nach dem Trocknen (Darren) entsteht Malz, das lagerfähig ist.

Mit Blattkeimen aus natürlicher Keimung (Mälzung) angereichertes Malz, das gemäß einer Variante der Erfindung eingesetzt wird, fällt bei der Reinigung von Malz bzw. bei dessen Verladung an. Dabei werden durch Siebeinrichtungen und gegebenenfalls auch Luftstrahlbehandlung (Windsichtung) Malz-Blattkeimlinge und gebrochene Malzkörner abgesondert. Dieses Gemisch ist stark mit Blattkeimen angereichert. Unter Blattkeimlingen werden nur die Keimlinge verstanden, die beim Mälzen aus dem jeweiligen Korn herauswachsen und nach dem Trocknen (Darren) leicht abbrechen können. Es wurde festgestellt, daß die Gewichtsanteile der Keimlinge bei Malzschrot, und zwar konkret für sogenanntes Pilsener Malz, ca. 0,9 Gew.%, also nicht mehr als ca. 1,0 Gew.%, betragen, während der Gewichtsanteil bei mit Blattkeimlingen in der vorstehend erläuterten Art angereichertem Malz, wie es erfindungsgemäß eingesetzt wird, 10 bis 13,5 Gew.% beträgt. Das erfindungsgemäß eingesetzte mit Blattkeimlingen angereicherte Malz weist also einen über zehnmal so hohen Blattkeimlingsanteil wie normaler Malzschrot auf. Wenn also erfindungsgemäß 10 bis 40 Gew.% mit Blattkeimlingen angereichertes Malz eingesetzt werden, so ist der Blattkeimlingsgehalt der zur Malzextrakt-Bereitung verwendeten Malzmischung mehr als doppelt bis mehr als viermal so hoch wie bei normalerweise zur Herstellung eines Malzextraktes eingesetztem Malz.

Die Temperaturbehandlung erfolgt vorteilhafterweise bei Temperaturen von 100 bis 120°C und besonders bevorzugt bei einer Temperatur von 105 bis 117°C. Die Erhitzung erfolgt vorteilhafterweise über 5 bis 20 Stunden und bevorzugt über 14 bis 18 Stunden.

Die Temperaturbehandlung erfolgt vorteilhafterweise ausgehend von einem Extraktgehalt von 80 Gewichtsprozenten, der beim Erhitzen durch Wasserverdampfung laufend ansteigt bei gleichzeitig steigender Temperatur des Extrakts. Die letzten 8 bis 12 Std. liegt der Extraktgehalt dann bei 88 bis 94 Gewichtsprozenten und die Temperatur bei 112 bis 117°C.

Wenn Grünmalz, das auch Blattkeimlinge in noch feuchter und daher besonders aktiver Form enthält, eingesetzt wird, so werden bevorzugt 10 bis 20 Gew.% eingesetzt. Wenn mit Blattkeimlingen angereichertes Malz eingesetzt wird, bei dem die Keimlinge ja schon einen Trocknungsprozeß mit dem Malz durchgemacht haben, wodurch die Aktivität der enthaltenen Wirkstoffe gemindert wurde, so werden bevorzugt 25 bis 35 Gew.% derartiges angereichertes Malz eingesetzt, wobei der Anteil auch abhängt von dem Anteil an Blattkeimlingen. Höhere Anteile entweder von Grünmalz oder aber von mit Blattkeimlingen angereichertes Malz sind möglich, aber nicht notwendig. Außerdem erhöhen sie die Gefahr eines bitteren Geschmacks und höherer Viskosität für das dunkle Endprodukt.

Nachfolgend werden Ausführungsbeispiele der Erfindung näher erläutert.

Die Angabe der Farbkraft in EBC-Einheiten erfolgt entsprechend den Definitionen der European Brewery Convention (EBC) (siehe "ANALYTICA-EBC", 3. Ausgabe 1975, Zürich, D 39 und BAUSCH/SILBERREISEN/BIELIG "Arbeitsvorschriften zur chemisch-brautechnischen Betriebskontrolle", Berlin 1963, Seiten 85,86.

### Beispiel 1:

**a)** Eine Mischung aus 804 kg Gerstenmalz und 396 kg mit Blattkeimen angereichertem Gerstenmalz, also 67 Gew.% Gerstenmalz und 33 Gew.% mit Blattkeimen angereichertes Gerstenmalz, wird geschrotet und mit 4500 l Wasser eingemaischt und auf 50°C erwärmt. Diese Temperatur wird 30 Minuten beibehalten. Dann wird die Maische auf 63°C erhitzt und 1 Stunde bei dieser Temperatur gehalten. Dann wird die Maische auf 97°C weitererhitzt und sofort geläutert, d.h. die Treber abfiltriert. Das Filtrat, das in der Fachliteratur auch als geläuterte Würze bezeichnet wird, wird bei vermindertem Druck, bei etwa 0,5 bar, bei ca. 80°C eingedampft, bis der refraktometrisch ermittelte Extraktgehalt 78 bis 80% beträgt. Auf diese Weise entstehen ca. 1100 kg Malzextrakt, der eine honiggelbe sirupartige Konsistenz hat. Diese Herstellung von Malzextrakt erfolgt hinsichtlich der Verfahrensführung in üblicher Weise, wie sie beispielsweise im Handbuch der Lebensmittelchemie, Band V/1. Teil, 1967, Seiten 695 f. und Band VII, 1968, Seiten 106 bis 120 beschrieben sind.
**b)** 8000 kg eines nach a) hergestellten speziellen Malzextraktes werden in einem Maischbottich über eine Zeitdauer von ca. 1 Stunde auf 112°C aufgeheizt. Dann wird der Malzextrakt über weitere 16 Stunden erhitzt, wobei das Gefäß etwa 10 Stunden lang offen gehalten wird, damit ein Teil des Wassers entweichen kann. Dabei steigt durch Wasserverdampfung der Extraktgehalt auf 88 bis 94 Gew.% an und damit die Temperatur letztlich bis auf 117°C. Nach dieser Erhitzungszeit erhält man einen tiefdunkel gefärbten Malzextrakt mit rund 23 000 EBCEinheiten Farbtiefe und ca. 94% Extraktgehalt. Dieser Extrakt kann mit Wasser oder normalem Malzextrakt verdünnt werden, um die für den jeweils gewünschten Einsatzzweck gewünschte Farbtiefe und angestrebte Viskosität zu erreichen. Es wurde kein Zuckerkulör gebildet.

### Beispiel 2:

Beispiel 1 wurde dahingehend abgewandelt, daß etwa 40 Gew.% mit Blattkeimen angereichertes Malz und dementsprechend nur 60 Gew.% normales Malz, jeweils aus Gerste, eingesetzt wurden. Die Erhitzungszeit kann 1 bis 2 Stunden kürzer sein als im Beispiel 1, um die gleiche Färbung zu erreichen, da hier ein hoher Anteil von mit Blattkeimlingen angereichertem Malz eingesetzt wurden.

### Beispiel 3:

Beispiel 1 wurde dahingehend abgewandelt, daß etwa 15 Gew.% mit Blattkeimen angereichertes Malz und dementsprechend nur 85 Gew.% normales Malz, jeweils aus Gerste, eingesetzt wurden. Die Erhitzungszeit mußte hier etwa 2 Stunden länger-sein als im Beispiel 1, um die gleiche Färbung zu erreichen. Bei gleicher Erhitzungsdauer wie im Beispiel 1 wurde eine um ca. 2000 EBC-Einheiten geringere Farbkraft, also eine Farbkraft von ca. 20 000 bis 21 000 EBC-Einheiten, erreicht.

### Beispiel 4:

Beispiel 1 wurde dahingehend abgewandelt, daß 1020 kg Malz, und zwar Pilsener Malz, geschrotet, und 180 kg Grünmalz, ebenfalls aus Gerste, also 85 Gew.% normales Malz und 15 Gew.% Grünmalz, eingesetzt wurden.

### Beispiel 5:

Es wurden 1080 kg normales geschrotetes Malz, also 90 Gew.% Malz, und 120 kg Grünmalz, also 10 Gew.% Grünmalz, zur Herstellung des Malzextrakts eingesetzt. Hierbei wurde nach der im Beispiel 1 angegebenen Erhitzungszeit eine Farbkraft von 18 000 EBC-Einheiten erreicht.

### Beispiel 6:

Es wurden 900 kg Malz, also 75 Gew.% Malz, und 300 kg Grünmalz, also 25 Gew.% Grünmalz, eingesetzt. Hierbei ist eine um 2 Stunden geringere Erhitzungszeit, als im Beispiel 1 beschrieben wurde, ausreichend um eine Farbkraft von 23 000 EBC-Einheiten zu erreichen.

Die dunklen erhaltenen Malzextrakte werden zur Herstellung von Brot oder zur Herstellung von anderen Backwaren in einer Menge von 0,5 bis 5 Gew.% bezogen auf die eingesetzte Mehlmenge, bei der Teigbereitung zugesetzt. Andere Dosierungshöhen sind ohne weiteres möglich. Man erhält hierbei Brote und Gebäck mit angenehm brauner Krumenfarbe, gutem abgerundetem Geschmack und langer Frischhaltung. Für Lebkuchen, Dauerbackwaren, Kuchen, Bonbons, Getränke (Bier und Cola-Getränke) sowie andere Lebens- und Futtermittel können die erhaltenen Malzextrakte in flüssiger oder fester Form eingesetzt werden.

## Patentansprüche

1. Verfahren zur Herstellung eines dunklen Lebensmittels, dadurch gekennzeichnet, daß aus 10 bis 40 Gew.% mit Blattkeimen aus dem natürlichen Mälzungsprozeß angereichertes Malz oder aus 5 bis 25 Gew.% Grünmalz und aus üblichem Malz auf 100 Gew.% ein Malzextrakt hergestellt wird und daß dieser Malzextrakt auf eine Temperatur von 100 bis 120°C erhitzt und unter Rühren so lange auf dieser Temperatur gehalten wird, bis er eine starke dunkle Färbung annimmt.

2. Verfahren nach Anspruch 1, dadurch gekennzeichnet, daß die Erhitzung auf eine Temperatur von 100 bis 120°C erfolgt.

3. Verfahren nach Anspruch 2, dadurch gekennzeichnet, daß die Erhitzung auf eine Temperatur von 105 bis 117°C erfolgt.

4. Verfahren nach Anspruch 1, dadurch gekennzeichnet, daß die Erhitzung über 5 bis 20 Stunden erfolgt.

5. Verfahren nach Anspruch 4, dadurch gekennzeichnet, daß die Erhitzung über 14 bis 18 Stunden erfolgt.

6. Verfahren nach Anspruch 1, dadurch gekennzeichnet, daß Getreide-Malze eingesetzt werden.

7. Verfahren nach Anspruch 6, dadurch gekennzeichnet, daß Malz, Grünmalz oder mit Blattkeimen angereicherter Malz aus Gerste, Weizen oder Roggen eingesetzt wird.

8. Verfahren nach Anspruch 1, dadurch gekennzeichnet, daß die Temperaturbehandlung zumindest zeitweilig bei einem Extraktgehalt von 88 bis 94 Gew.% erfolgt.

9. Verfahren nach Anspruch 1, dadurch gekennzeichnet, daß 10 bis 20 Gew.% Grünmalz eingesetzt wird.

10. Verfahren nach Anspruch 1, dadurch gekennzeichnet, daß 20 bis 30 Gew.% mit Blattkeimen angereichertes Malz eingesetzt wird.

## Claims

1. Method for the production of a dark foodstuff, characterized in that a malt extract is produced from 10 to 40% by weight of malt enriched with leaf germs from the natural malting process or from 5 to 25% by weight of green malt and from normal malt of 100% by weight and that this malt extract is heated to a temperature of 100 to 120°C and is kept at this temperature with agitation, until the malt extract takes on a strong dark colouring.

2. Method according to claim 1, characterized in that heating is carried out up to a temperature of 100 to 120°C.

3. Method according to claim 2, characterized in that heating is carried out up to a temperature of 105 to 117°C.

4. Method according to claim 1, characterized in that heating is carried out for 5 to 20 hours.

5. Method according to claim 4, characterized in that heating is carried out for 14 to 18 hours.

6. Method according to claim 1, characterized in that cereal malts are used.

7. Method according to claim 6, characterized in that malt, green malt or malt of barley, wheat or rye enriched with leaf germs is used.

8. Method according to claim 1, characterized in that at least temporarily the temperature treatment is carried out with an extract content of 88 to 94% by weight

9. Method according to claim 1, characterized in that 10 to 20% by weight of green malt are used.

10. Method according to claim 1, characterized in that 20 to 30% by weight of malt enriched with leaf germs are used.

## Revendications

1. Procédé pour la préparation d'un aliment de couleur foncée, caractérisé en ce que l'on prépare un extrait de malt à partir de 10 à 40 % en poids de malt enrichi avec des embryons de feuilles provenant du processus de maltage naturel ou à partir de 5 à 25 % en poids de malt vert, et à partir de malt usuel jusqu'à 100 % en poids, et en ce que l'on chauffe cet extrait de malt à une température de 100 à 120°C et on le maintient sous agitation à cette température jusqu'à ce qu'il prenne une couleur très foncée.

2. Procédé selon la revendication 1, caractérisé en ce que le chauffage est effectué à une température de 100 à 120°C.

3. Procédé selon la revendication 2, caractérisé en ce que le chauffage est effectué à une température de 105 à 117°C.

4. Procédé selon la revendication 1, caractérisé en ce que le chauffage est effectué pendant 5 à 20 heures.

5. Procédé selon la revendication 1, caractérisé en ce que le chauffage est effectué pendant 14 à 18 heures.

6. Procédé selon la revendication 1, caractérisé en ce que l'on utilise des malts de céréales.

7. Procédé selon la revendication 6, caractérisé en ce que l'on utilise du malt, du malt vert ou du malt enrichi avec des embryons de feuilles, provenant d'orge, de froment ou de seigle.

8. Procédé selon la revendication 1, caractérisé en ce que le traitement thermique est effectué au moins temporairement à une teneur en extrait de 88 à 94 % en poids.

9. Procédé selon la revendication 1, caractérisé en ce que l'on utilise de 10 à 20 % en poids de malt vert.

10. Procédé selon la revendication 1, caractérisé en ce que l'on utilise de 20 à 30 % en poids de malt enrichi avec des embryons de feuilles.
